# EUROPEAN PATENT APPLICATION

(11) **EP 4 815 128 A1**
(43) Date of publication of application: **30.09.2026**
(21) Application number: 24926840.0
(22) Date of filing: 21.11.2024
(51) Int. Cl.: H01M 50/148, H01M 50/10

(54) **TOP COVER ASSEMBLY, ELECTRODE SHEET, BATTERY CELL, BATTERY, AND ELECTRIC DEVICE**

(30) Priority: 01.03.2024 CN 202410238840
(71) Applicant: Contemporary Amperex Technology Co., Limited, Ningde, Fujian 352100 (CN)
(72) Inventor: XIE, Ming, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); KONG, Pan, Ningde, Fujian 352100 (CN)
(74) Representative: Lorenz Seidler Gossel Part. mbB
(86) International application number: PCT/CN2024/133611
(87) International publication number: WO 2025/179982

(57) **Abstract**

A top cover assembly, an electrode sheet, a battery cell, a battery, and an electric device, relating to the technical field of batteries. The top cover assembly comprises: a top cover and poles, wherein the top cover comprises a top cover main body portion and first bent sections, and the two ends of the top cover main body portion are connected to the first bent sections bent relative to the top cover main body portion; and an electrode terminal, comprising poles, wherein the poles are mounted on the first bent sections.

## Description

### CROSS-REFERENCE TO RELATED APPLICATIONS

The present application is proposed based on Chinese Patent Application No. 202410238840.5, filed on March 01, 2024, and claims priority to the Chinese Patent Application, which is incorporated herein by reference in its entirety.

### TECHNICAL FIELD

The present application relates to the technical field of batteries, and in particular, to a top cover assembly, an electrode sheet, a battery cell, a battery, and a power consuming apparatus.

### BACKGROUND

In recent years, new energy vehicles have made a leap forward in development. In the field of electric vehicles, power batteries play an irreplaceable important role as the power sources of electric vehicles.

To enable a battery to have sufficient power, a plurality of battery cells in a box body of the battery generally are arranged in a stacked manner, and the energy density of each battery cell is increased as much as possible. However, due to restriction by a connection manner of terminal posts in grouping battery cells, there is a lot of tab occupancy space and terminal post occupancy space in the battery cell, resulting in limited space utilization of the battery cell, thereby seriously affecting the energy density of the battery cell.

### SUMMARY

The present application provides a top cover assembly, an electrode sheet, a battery cell, a battery, and a power consuming apparatus, allowing the space utilization of a battery cell by a cell to be improved in the case of fixed dimensions of the battery cell, so that an energy density of the battery cell is improved, thereby improving an energy density of a battery with a combination of a plurality of battery cells.

According to a first aspect, embodiments of the present application provide a top cover assembly, including: a top cover and a terminal post, the top cover including a top cover body portion and a first bent section, where two ends of the top cover body portion are respectively connected to the first bent sections bent relative to the top cover body portion; and an electrode terminal including the terminal post, where the terminal post is mounted on the first bent section.

In the foregoing technical solution, the top cover is designed into a bent shape, and the terminal posts are mounted on the two longitudinal first bent sections and extend in different directions. Compared with a design solution in which terminal posts protrude from a same side or terminal posts protrude from different sides, on the one hand, the present application can make full use of transverse space of a battery cell. The occupancy of a longitudinal dimension of the battery cell by the terminal posts is reduced, increasing the volume of a cell of the battery cell in the case of fixed dimensions of the battery cell. As such, the space utilization of the battery cell by the cell is improved, thereby improving an energy density of the battery cell. On the other hand, in grouping the battery cells, butt welding can be performed on terminal posts of adjacent battery cells. This reduces the usage of and space occupied by a busbar or a busbar assembly, reducing the space occupancy of the battery cell, so that the space utilization of the battery cell by the cell is improved.

In some embodiments, an end of the terminal post is connected to the first bent section. A transverse projection of the terminal post in an X direction falls within a transverse projection of the first bent section in the X direction, and an outer contour of the transverse projection of the terminal post in the X direction is spaced apart from an outer contour of the transverse projection of the first bent section in the X direction.

In some embodiments, the top cover further includes a second bent section. The second bent section is connected to an end of the first bent section that is away from the top cover body portion. The second bent section is bent relative to the first bent section and extends in a direction away from the top cover body portion.

In some embodiments, a length of the terminal post protruding from the first bent section in the X direction is greater than or equal to a length of the second bent section protruding from the first bent section in the X direction.

In some embodiments, the length of the terminal post protruding from the first bent section in the X direction is H1, and the length of the second bent section protruding from the first bent section in the X direction is H2, which satisfies: 0 mm < H1-H2 ≤ 3 mm.

In some embodiments, a length of the top cover in the X direction is L0, and the length of the second bent section protruding from the first bent section in the X direction is H2, which satisfies: 1% ≤ H2/L0 ≤ 10%.

In some embodiments, a length of the first bent section in a Z direction is H3, and a length of the terminal post in the Z direction is L1, which satisfies: 1 < H3/L1 ≤ 4.

In some embodiments, a length of the first bent section in a Y direction is L2, and a length of the terminal post in the Y direction is L3, which satisfies: 1 < L2/L3 ≤ 2.

According to a second aspect, embodiments of the present application provide an electrode sheet, including: an electrode sheet body portion, the electrode sheet body portion including a first portion and a second portion connected to each other in a Z direction, where a length of the first portion in an X direction is less than a length of the second portion in the X direction, the first portion has a notch formed thereon, and the notch is used for avoiding the first bent section; and
a tab, the tab being connected to a side of the first portion that faces away from the second portion.

In the foregoing technical solution, the tab is connected to the side of the first portion that faces away from the second portion, and the tab extends in a length direction of the electrode sheet, so that occupancy space of the tab and occupancy space of a terminal post are located on different sides of a battery cell. Compared with disposing the tab and the terminal post on a same side of the electrode sheet, this enables the space occupancy of the battery cell by the tab and the terminal post to be reduced, so that the space utilization of the battery by a cell is improved.

In some embodiments, the electrode sheet is applied to a stacked cell. The notches are provided at two ends of the first portion in the X direction. A distance from the tab to one of the notches is less than a distance to the other notch.

In some embodiments, the electrode sheet is applied to a wound cell. The plurality of notches divide the first portion into a plurality of sections, each section being provided with the tab. The electrode sheet includes a plurality of sub-electrode sheets connected in the X direction. The second portions of two adjacent ones of the sub-electrode sheets are connected to each other. The first portions of two adjacent ones of the sub-electrode sheets are separated from each other by the notch. A distance from the tab to one of two adjacent notches is less than a distance to the other notch.

According to a third aspect, embodiments of the present application provide a battery cell, including: a case, the case having an opening formed thereon; a cell disposed in the case; and the top cover assembly according to any of the foregoing embodiments, where the top cover assembly is mounted at the opening.

In the foregoing technical solution, an outer contour of the cell according to any of the foregoing embodiments is adapted to an outer contour of the top cover assembly, so that transverse space of the battery cell can be fully utilized. The space occupancy of the battery cell is reduced, increasing the volume of the cell of the battery cell in the case of fixed dimensions of the battery cell. As such, the space utilization of the battery cell by the cell is improved, thereby improving an energy density of the battery cell.

In some embodiments, a positive electrode tab and a negative electrode tab of the cell are located on a same side.

In some embodiments, the electrode terminal further includes an adapter. The adapter includes a first section and a second section that are connected and bent relative to each other. The first section is connected to the terminal post, and the second section is connected to the tab.

In some embodiments, the cell is a stacked cell or a wound cell.

In some embodiments, a length of the battery cell in an X direction is L4, which satisfies: 100 mm ≤ L4 ≤ 400 mm.

According to a fourth aspect, an example of the present application provides a battery, including the battery cell according to any of the foregoing embodiments.

In the foregoing technical solution, the battery cell according to any of the foregoing embodiments has a high energy density, so that a battery having the battery cell has a high energy density.

In some embodiments, terminal posts of at least part of adjacent ones of the battery cells are disposed opposite each other and in butt connection with each other.

According to a sixth aspect, embodiments of the present application provide a power consuming apparatus, including the foregoing battery. The battery is configured to supply electric energy to the power consuming apparatus.

In the foregoing technical solution, the foregoing battery has a high energy density, and therefore the power consuming apparatus including the battery has a long battery life.

### BRIEF DESCRIPTION OF THE DRAWINGS

To describe the technical solutions in the embodiments of the present application more clearly, the following briefly introduces the accompanying drawings required for the embodiments. It should be understood that the following accompanying drawings show merely some embodiments of the present application and therefore should not be considered as a limitation to the scope. A person of ordinary skill in the art may still derive other related drawings from these accompanying drawings without creative efforts.
FIG. 1 is a schematic structural diagram of a vehicle according to some embodiments of the present application;
FIG. 2 is a structural exploded view of a battery according to some embodiments of the present application;
FIG. 3 is a structural exploded view of a battery cell according to some examples of the present application;
FIG. 4 is one of schematic structural diagrams of a battery cell according to some embodiments of the present application;
FIG. 5 is a front view of a battery cell according to some embodiments of the present application;
FIG. 6 is a schematic structural view of a top cover assembly according to some embodiments of the present application;
FIG. 7 is a front view of a top cover assembly according to some embodiments of the present application;
FIG. 8 is a side view of a top cover assembly according to some embodiments of the present application;
FIG. 9 is a top view of a top cover assembly according to some embodiments of the present application;
FIG. 10 is a schematic structural diagram of a stacked cell according to some embodiments of the present application;
FIG. 11 is a schematic structural diagram of an electrode sheet of a stacked cell according to some embodiments of the present application;
FIG. 12 is a schematic structural diagram of a wound cell according to some embodiments of the present application;
FIG. 13 is a schematic structural diagram of an electrode sheet of a wound cell according to some embodiments of the present application;
FIG. 14 is a schematic structural diagram of a case according to some embodiments of the present application;
FIG. 15 is a schematic structural view of a battery cell with terminal posts facing two sides according to some embodiments of the present application;
FIG. 16 is a schematic structural diagram of a battery cell with terminal posts protruding from a same side according to the related technology; and
FIG. 17 is a schematic structural diagram of a battery cell with terminal posts protruding from different sides according to the related technology.

Reference numerals:
vehicle 1, battery 10, box body 11, first box body 111, second box body 112, and battery cell 12;
case 13 and opening 131;
cell 14, electrode sheet 141, electrode sheet body portion 1411, first portion 14111, second portion 14112, tab 142, terminal post occupancy space V1, and tab occupancy space V2;
top cover assembly 15, top cover 151, top cover body portion 1511, first bent section 1512, second bent section 1513, and terminal post 152;
adapter 16, first section 161, second section 162, motor 20, and controller 30.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are merely some rather than all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have same meanings as commonly understood by a person skilled in the technical field of the present application. The terms used in the specification of the present application are merely for describing specific embodiments, and are not intended to limit the present application. The terms "include", "have", and any variations thereof in the specification and claims of the present application and in the foregoing descriptions of the accompanying drawings are intended to cover non-exclusive inclusions. In the specification and claims or accompanying drawings of the present application, the terms "first", "second", and the like are intended to distinguish different objects, rather than indicating a specific order or primary and secondary relationship.

Reference to "embodiment" in the present application means that specific features, structures, or characteristics described with reference to the embodiment may be included in at least one embodiment of the present application. The term appearing at different positions of the specification does not necessarily refer to the same embodiment or an independent or alternative embodiment that is mutually exclusive with another embodiment. Those skilled in the art explicitly or implicitly understands that the embodiments described in the present application may be combined with other embodiments.

In the descriptions of the present application, it should be noted that unless otherwise explicitly specified or defined, the terms "mount", "connect", "connection", and "attach" should be understood in a broad sense. For example, a connection may be a fixed connection, a detachable connection, or an integral connection; may be a direct connection or an indirect connection through an intermediary; or may be internal communication between two elements. A person of ordinary skill in the art may understand the specific meanings of the foregoing terms in the present application according to specific situations.

The term "and/or" in the present application is merely an associative relationship for describing associated objects, indicating that three relationships may be present. For example, A and/or B may indicate three cases: presence of only A; presence of both A and B; and presence of only B. In addition, the character "/" in the present application generally means that the associated objects before and after it are in an "or" relationship.

In the present application, "a plurality of" means two or more (including two). Similarly, "a plurality of groups" means two or more groups (including two groups), and "a plurality of pieces" means two or more pieces (including two pieces).

The battery cell mentioned in the embodiments of the present application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application. The battery cell may be in a cylindrical shape, a flat shape, a cuboid shape, or other shapes, which is not limited in the embodiments of the present application, either. Generally, battery cells are classified into three types based on packaging methods: columnar battery cells, square battery cells, and pouch battery cells, which are not limited in the embodiments of the present application, either.

The battery mentioned in the embodiments of the present application is a single physical module including one or more battery cells to provide a higher voltage and a higher capacity. For example, the battery mentioned in the present application may include a battery module, a battery pack, or the like. The battery generally includes a box body for packaging one or more battery cells or a plurality of battery modules. The box body can prevent a liquid or other foreign matter from affecting the charging or discharging of the battery cells.

The battery cell refers to a minimum unit constituting the battery. The battery cell includes a shell, a cell, and another electronic assembly. The shell is configured to accommodate the cell and the other electronic assembly.

The cell includes a positive electrode sheet, a negative electrode sheet, and a separator. The battery cell works mainly relying on the movement of metal ions between the positive electrode sheet and the negative electrode sheet. The positive electrode sheet includes a positive electrode current collector and a positive electrode active material layer. A surface of the positive electrode current collector is coated with the positive electrode active material layer. The positive electrode current collector not coated with the positive electrode active material layer protrudes from the positive electrode current collector coated with the positive electrode active material layer. The positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganese oxide, or the like. The negative electrode sheet includes a negative electrode current collector and a negative electrode active material layer. A surface of the negative electrode current collector is coated with the negative electrode active material layer. The negative electrode current collector not coated with the negative electrode active material layer protrudes from the negative electrode current collector coated with the negative electrode active material layer. The negative electrode current collector not coated with the negative electrode active material layer serves as a negative electrode tab. The material of the negative electrode current collector may be copper, and the negative electrode active material may be carbon, silicon, or the like. To ensure high-current conduction without fusing, there are a plurality of positive electrode tabs which are stacked together, and there are a plurality of negative electrode tabs which are stacked together.

The material of the separator may be polypropylene (PP), polyethylene (PE), or the like. In addition, the cell may be of a wound structure or a stacked structure. The embodiments of the present application are not limited thereto.

In recent years, new energy vehicles have made a leap forward in development. In the field of electric vehicles, power batteries play an irreplaceable important role as the power sources of electric vehicles. A battery includes a box body and a plurality of battery cells accommodated in the box body. As a core component of a new energy vehicle, a battery is subject to stringent requirements in terms of both safety and cycle life.

In a common power battery, to enable the battery to have sufficient power, a plurality of battery cells in a box body of the battery generally are arranged in a stacked manner, and the energy density of each battery cell is increased as much as possible. The inventor has found that due to restriction by a connection manner of terminal posts in grouping the battery cells, there is a lot of tab occupancy space and terminal post occupancy space in a battery cell, resulting in limited space utilization of the battery cell, thereby seriously affecting the improvement of the energy density of the battery cell.

Based on the foregoing consideration, to further improve the space utilization of the battery cell and improve the energy density of the battery cell, the inventor, after intensive research, has designed a top cover assembly, an electrode sheet, a battery cell, a battery, and a power consuming apparatus. The top cover assembly includes a top cover and a terminal post. The top cover includes a top cover body portion, a first bent section, and a second bent section. Two ends of the top cover body portion are respectively connected to the first bent sections bent relative to the top cover body portion. The second bent section that is bent relative to the first bent section and extends in a direction away from the top cover body portion is connected to an end of the first bent section that is away from the top cover body portion. The terminal post is mounted on the first bent section.

In the top cover assembly of such the structure, the top cover is designed into a bent shape, and the terminal posts are mounted on the two longitudinal first bent sections and extend in different directions. Compared with a design solution in which terminal posts protrude from a same side or terminal posts protrude from different sides, on the one hand, the present application can make full use of transverse space of a battery cell. The occupancy of longitudinal space of the battery cell by the terminal posts is reduced, increasing the volume of a cell of the battery cell in the case of fixed dimensions of the battery cell. As such, the space utilization of the battery cell by the cell is improved, improving an energy density of the battery cell, and thereby improving an energy density of a battery with a combination of a plurality of battery cells. On the other hand, in grouping the battery cells, butt welding can be performed on terminal posts of adjacent battery cells. This reduces the usage of and space occupied by a busbar or a busbar assembly, reducing the space occupancy of the battery cell. The space utilization of the battery cell by the cell is improved, thereby improving the energy density of the battery with a combination of a plurality of battery cells.

The battery disclosed in the embodiments of the present application may be used in a power consuming apparatus, for example, but not limited to, a vehicle, a ship, or an aircraft. A power supply system of the power consuming apparatus may be formed by using the top cover assembly, the electrode sheet, the cell, the battery cell, or the battery disclosed in the present application. This facilitates the improvement of an energy density of a battery.

Embodiments of the present application provide a power consuming apparatus using a battery as a power supply. The power consuming apparatus may be, but is not limited to, a mobile phone, a tablet computer, a laptop computer, an electric toy, an electric tool, an electric bicycle, an electric vehicle, a ship, spacecraft, or the like. The electric toy may include a stationary or mobile electric toy, such as a game machine, an electric car toy, an electric ship toy, and an electric airplane toy. The spacecraft may include an airplane, a rocket, a space shuttle, a spaceship, or the like.

For ease of description, the following embodiment is described by using an example in which a power consuming apparatus according to an embodiment of the present application is a vehicle.

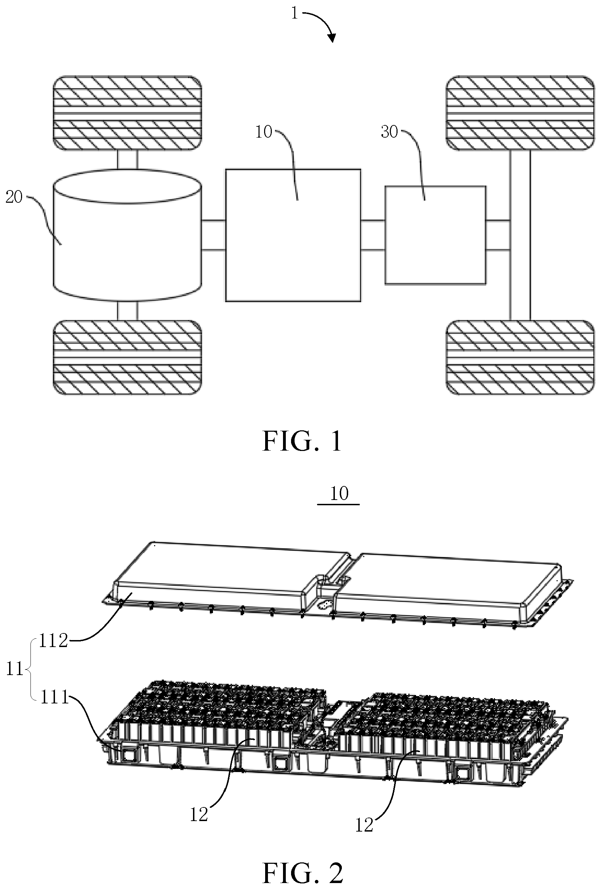

As shown in FIG. 1, FIG. 1 is a schematic structural diagram of a vehicle 1 according to an embodiment of the present application. The vehicle 1 may be a fuel vehicle, a gas vehicle, or a new energy vehicle. The new energy vehicle may be a pure electric vehicle, a hybrid electric vehicle, an extended range vehicle, or the like. A motor 20, a controller 30, and a battery 10 may be provided inside the vehicle 1. The controller 30 is configured to control the battery 10 to supply power to the motor 20. For example, the battery 10 may be disposed on the bottom, in the front, or in the rear of the vehicle 1. The battery 10 may be configured to supply power to the vehicle 1. For example, the battery 10 may be used as an operating power supply of the vehicle 1, and may be used for circuitry of the vehicle 1, for example, for the working power demands during starting, navigation, and traveling of the vehicle 1.

In another embodiment of the present application, the battery 10 may serve not only as an operating power supply of the vehicle 1, but also as a driving power supply of the vehicle 1, in place of or partially in place of fuel or natural gas, to supply driving power to the vehicle 1.

To satisfy different power use demands, the battery 10 may include a plurality of battery cells 12. The plurality of battery cells 12 may be connected in series, in parallel, or in a hybrid connection. The hybrid connection refers to a combination of a serial connection and a parallel connection.

FIG. 2 is a structural exploded view of the battery 10 according to an embodiment of the present application. The battery 10 includes a box body 11 and a plurality of battery cells 12. The battery cells 12 are accommodated in the box body 11. The box body 11 is used for providing an assembling space for the battery cells 12. The box body 11 may be of a variety of structures. In some examples, the box body 11 may include a first box body 111 and a second box body 112. The first box body 111 and the second box body 112 cover each other, and the first box body 111 and the second box body 112 jointly define the assembling space for accommodating the battery cells 12. The second box body 112 may be a hollow structure with one side open. The first box body 111 may be of a plate-shaped structure. The first box body 111 covers the open side of the second box body 112, so that the first box body 111 and the second box body 112 jointly define the assembling space. Alternatively, each of the first box body 111 and the second box body 112 may be a hollow structure with one side open, with the open side of the first box body 111 covering the open side of the second box body 112. Of course, the box body 11 formed by the first box body 111 and the second box body 112 may be in various shapes, such as a cylindrical shape or a cuboid shape.

In the battery 10, the plurality of battery cells 12 may be connected in series, in parallel, or in a hybrid connection. The hybrid connection refers to the presence of both a series connection and a parallel connection among the plurality of battery cells 12. The plurality of battery cells 12 may be directly connected together in series, in parallel, or in a hybrid connection, and then an entire structure formed by the plurality of battery cells 12 may be accommodated in the box body 11. Certainly, the battery 10 may alternatively be in a form of a battery 10 module formed by the plurality of battery cells 12 that are first connected in series, in parallel, or in a hybrid connection. A plurality of battery 10 modules are then connected in series, in parallel, or in a hybrid connection to form an entire structure and accommodated in the box body 11.

Each of the battery cells 12 may be a secondary battery 10 or a primary battery 10; or may be a lithium-sulfur battery 10, a sodium-ion battery 10, or a magnesium-ion battery 10, but is not limited thereto. The battery cell 12 may be in a flat shape, a cuboid shape, or other shapes.

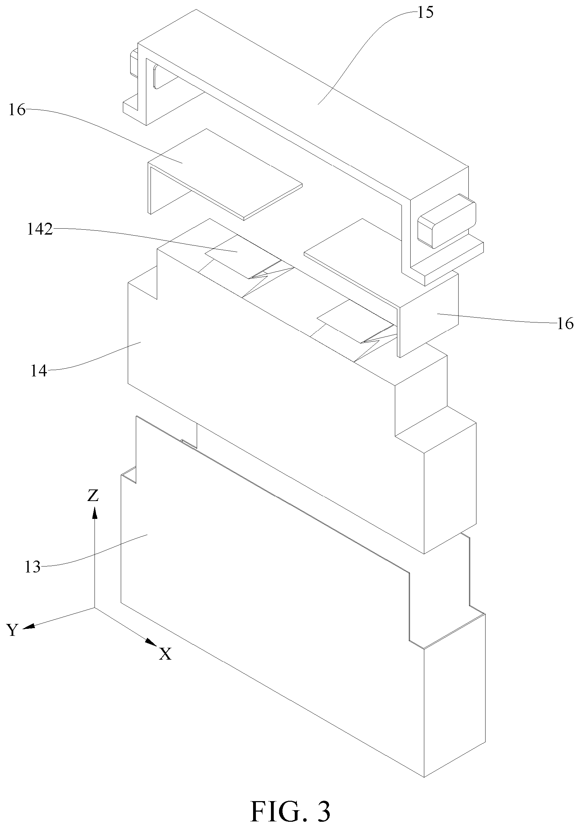

As shown in FIG. 3, the battery cell 12 includes a shell, a cell 14, and another electronic assembly. The shell is configured to accommodate the cell 14 and the other electronic assembly. The shell includes a top cover assembly 15 and a case 13. The top cover assembly 15 refers to a component that covers an opening 131 of the case 13 to isolate an internal environment of the battery cell 12 from an external environment.

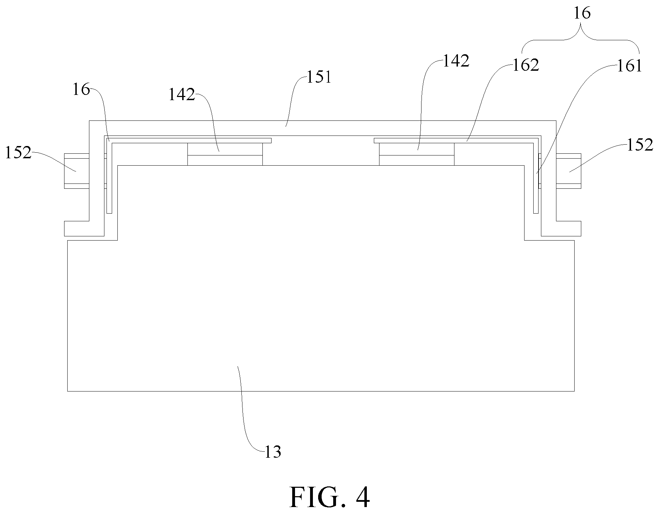

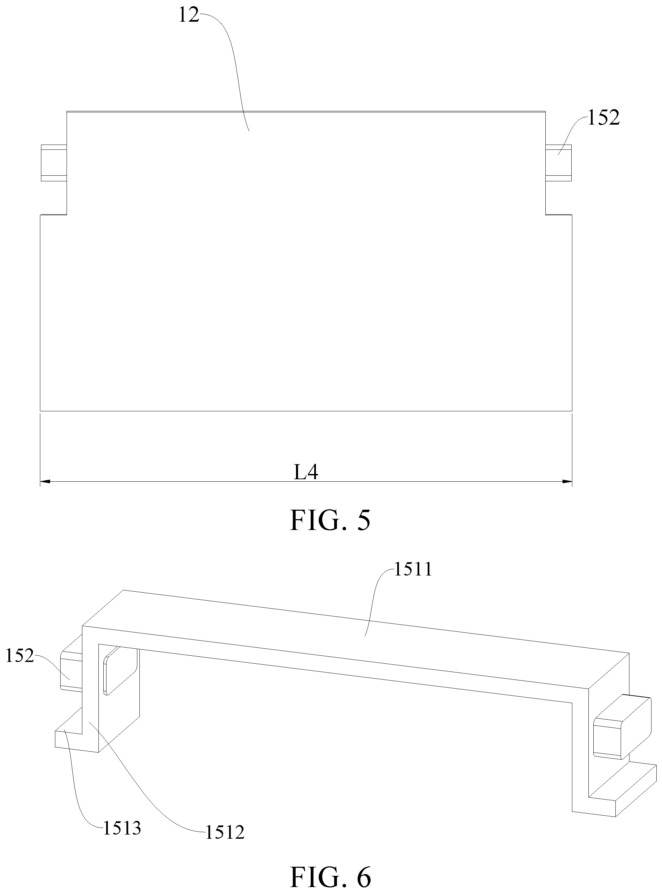

As shown in FIG. 4 and FIG. 5, the top cover assembly 15 includes a top cover 151 and a terminal post 152. The terminal post 152 is mounted on the top cover 151.

Without limitation, the shape of the top cover 151 may adapted to the shape of the case 13 to fit with the case 13. Optionally, the top cover 151 may be made of a material (for example, aluminum alloy) with a hardness and strength, so that the top cover 151 does not easily deform under extrusion and collision, enabling the battery cell 12 to have a higher structural strength and improved reliability. A functional component such as an electrode terminal may be provided on the top cover 151. The electrode terminal may be configured to electrically connect to the cell 14, so as to output or input electric energy of the battery cell 12. In some embodiments, a pressure relief mechanism configured to relieve internal pressure when the internal pressure or temperature in the battery cell 12 reaches a threshold may further be provided on the top cover 151. The top cover 151 may alternatively be made of various materials, such as copper, iron, aluminum, stainless steel, aluminum alloy, and plastic, which are not particularly limited in the embodiments of the present application. In some embodiments, an insulating component may further be provided on an inner side of the top cover 151. The insulating component may be configured to isolate an electrical connection component in the case 13 from the top cover 151, thereby reducing a risk of short circuit. For example, the insulating component may be made of plastic, rubber, or the like.

The case 13 is an assembly configured to fit with the top cover 151 to form an internal environment of the battery cell 12, where the formed internal environment may be used to accommodate the cell 14, an electrolyte solution, and other components.

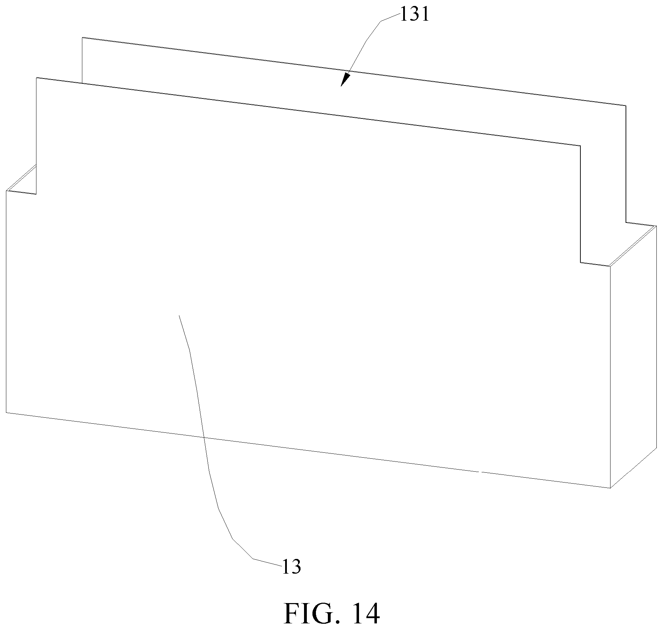

The case 13 and the top cover 151 may be separate components. As shown in FIG. 3 and FIG. 14, an opening 131 may be provided on the case 13. At the opening 131, the top cover 151 covers the opening 131 to form the internal environment of the battery cell 12.

Without limitation, the top cover 151 and the case 13 may alternatively be integrated together. Specifically, the top cover 151 and the case 13 may first form a common connection surface before other components are put into the case, and then the top cover 151 covers the case 13 when the interior of the case 13 is to be packaged. The case 13 may be of a variety of shapes and sizes, for example, a cuboid shape, a cylindrical shape, a hexagonal prism shape, or the like. Specifically, the shape of the case 13 may be determined based on a specific shape and size of the cell 14. The case 13 may be made of various materials, such as copper, iron, aluminum, stainless steel, aluminum alloy, and plastic, which are not particularly limited in the embodiments of the present application.

According to some embodiments of the present application, as shown in FIG. 6, the present application provides the top cover assembly 15, applied to the battery 10. The top cover assembly 15 includes the top cover 151 and the terminal post 152.

The top cover 151 includes a top cover body portion 1511 and a first bent section 1512. Two ends of the top cover body portion 1511 are respectively connected to the first bent sections 1512 bent relative to the top cover body portion 1511. The terminal post 152 is mounted on the first bent section 1512.

The top cover 151 is an assembly configured to fit with the case 13 to form an internal environment of the battery cell 12. The shape of the top cover 151 may be adapted to the shape of the case 13 to fit with the case 13.

There are two first bent sections 1512. The two first bent sections 1512 are disposed opposite each other at the two ends of the top cover body portion 1511 in an X direction. An end of the first bent section 1512 is connected to an end of the top cover body portion 1511, and the other end of the first bent section 1512 extends in a longitudinal direction of the battery 10.

The top cover body portion 1511 is spaced apart from the cell 14, and a tab 142 is disposed between the top cover body portion 1511 and the cell 14. The terminal posts 152 are respectively mounted on the first bent sections 1512 at the two ends of the top cover body portion 1511 in the X direction. The two terminal posts 152 on the first bent sections 1512 extend away from each other in the X direction, that is, the two terminal posts 152 extend respectively in two directions.

In the top cover assembly 15 of such the structure, the top cover 151 is designed into a bent shape, and the terminal posts 152 are mounted on the two first bent sections 1512 in a Z direction. The two terminal posts 152 located on the first bent sections 1512 extend away from each other in the X direction. Compared with a design solution in which terminal posts protrude from a same side or terminal posts protrude from different sides, on the one hand, the present application can make full use of transverse space of the battery cell 12. The occupancy of a longitudinal dimension of the battery cell 12 by the terminal posts 152 is reduced, increasing the volume of the cell 14 of the battery cell 12 in the case of fixed dimensions of the battery cell 12. As such, the space utilization of the battery cell 12 by the cell 14 is improved, thereby improving an energy density of the battery cell 12. On the other hand, in grouping the battery cells 12, butt welding can be performed on terminal posts 152 of adjacent battery cells 12. This reduces the usage of and space occupied by a busbar or a busbar assembly, reducing the space occupancy of the battery cell 12, so that the space utilization of the battery cell 12 by the cell is improved.

In some embodiments, as shown in FIG. 6, an end of the terminal post 152 is connected to the first bent section 1512. A transverse projection of the terminal post 152 in the X direction falls within a transverse projection of the first bent section 1512 in the X direction, and an outer contour of the transverse projection of the terminal post 152 in the X direction is spaced apart from an outer contour of the transverse projection of the first bent section 1512 in the X direction.

In the embodiments, the terminal post 152 is spaced apart from each edge of the first bent section 1512, so as to reduce a distance between adjacent battery cells 12 when the plurality of battery cells 12 are combined. Occupancy space of the terminal post 152 is reduced, further improving the energy density of the battery 10 with the combination of the plurality of battery cells 12.

In some embodiments, the top cover 151 further includes a second bent section 1513. The second bent section 1513 is connected to an end of the first bent section 1512 that is away from the top cover body portion 1511. The second bent section 1513 is bent relative to the first bent section 1512 and extends in a direction away from the top cover body portion 1511.

In the embodiments, the second bent section 1513 that is bent relative to the first bent section 1512 and extends in the direction away from the top cover body portion 1511 is connected to the end of the first bent section 1512 that is away from the top cover body portion 1511.

The provision of the second bent section 1513 can facilitate mounting and fitting of the top cover 151 with the case 13, increasing connection stability between the top cover 151 and the case 13.

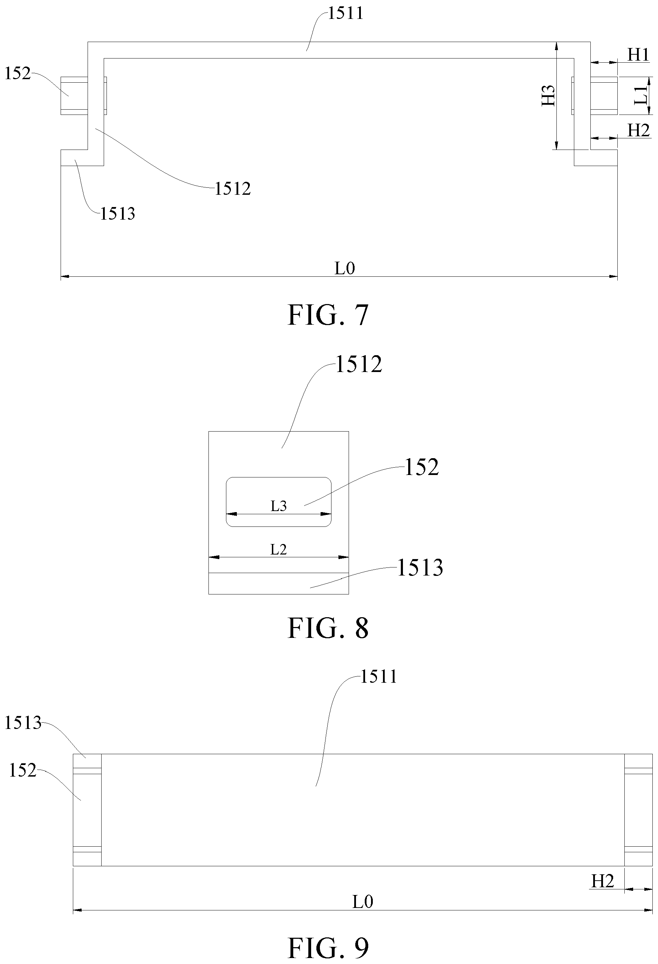

In some embodiments, as shown in FIG. 7, a length of the terminal post 152 protruding from the first bent section 1512 in the X direction is greater than or equal to a length of the second bent section 1513 protruding from the first bent section 1512 in the X direction.

An end of the terminal post 152 may be level with an end of the second bent section 1513 that faces away from the first bent section 1512, so that the butt welding can be implemented between the terminal posts 152 of the adjacent battery cells 12, and the distance between the adjacent battery cells 12 can be reduced, thereby improving the energy density of the battery 10 with the combination of the plurality of battery cells 12.

Alternatively, the end of the terminal post 152 may be higher than the length of the second bent section 1513 protruding from the first bent section 1512 in the X direction, so as to implement the butt welding between the terminal posts 152 of the adjacent battery cells 12 without a busbar assembly or an adapter plate. As such, the space utilization of the battery 10 by the cell 14 is improved, thereby improving the energy density of the battery 10 with the combination of the plurality of battery cells 12.

In some embodiments, as shown in FIG. 7, the length of the terminal post 152 protruding from the first bent section 1512 in the X direction is H1, and the length of the second bent section 1513 protruding from the first bent section 1512 in the X direction is H2, which satisfies: 0 mm < H1-H2 ≤ 3 mm.

A difference between H1 and H2 may be 1 mm, 1.5 mm, 2 mm, or 3 mm. That is, the end of the terminal post 152 protrudes further than the end of the second bent section 1513 that faces away from the first bent section 1512, so as to implement the butt welding between the terminal posts 152 of the adjacent battery cells 12 without a busbar assembly or an adapter plate. As such, the space utilization of the battery 10 by the cell 14 is improved, thereby improving the energy density of the battery 10 with the combination of the plurality of battery cells 12.

In the embodiments, by setting a positional relationship between the terminal post 152 and the end of the second bent section 1513 that faces away from the first bent section 1512, the adjacent battery cells 12 can be welded together through the butt welding of the terminal posts 152. Compared with a solution in which two terminal posts 152 extending in a same direction require a busbar assembly or an adapter plate to connect two battery cells 12 together, the present application allows the usage of and space occupied by a busbar or a busbar assembly to be reduced through the butt welding, saving more welding space. As such, the space utilization of the battery 10 by the cell 14 is improved, thereby improving the energy density of the battery 10 with the combination of the plurality of battery cells 12.

In some embodiments, as shown in FIG. 7, a length of the first bent section 1512 in the Z direction is H3, and a length of the terminal post 152 in the Z direction is L1, which satisfies: 1 < H3/L1 ≤ 4.

The ratio of H3 to L1 may be 1.5, 2, 3, or 4. That is, the length of the first bent section 1512 is greater than the length of the terminal post 152, to prevent the terminal post 152 from protruding from the top cover 151 in the Z direction, so that the occupancy of the longitudinal dimension of the battery cell 12 by the terminal posts 152 is reduced. As such, the space utilization of the battery 10 by the cell 14 is improved, thereby improving the energy density of the battery 10 with the combination of the plurality of battery cells 12.

In some embodiments, as shown in FIG. 8, a length of the first bent section 1512 in a Y direction is L2, and a length of the terminal post 152 in the Y direction is L3, which satisfies: 1 < L2/L3 ≤ 2.

The ratio of L2 to L3 may be 1.5, 1.8, 1.9, or 2. That is, the length of the first bent section 1512 in the Y direction is greater than the length of the terminal post 152 in the Y direction, to prevent the terminal post 152 from protruding from the first bent section 1512 in the Y direction, thereby reducing the distance between the adjacent battery cells 12, and further improving the energy density of the battery 10 with the combination of the plurality of battery cells 12.

In some embodiments, as shown in FIG. 9, a length of the top cover 151 in the X direction is L0, and the length of the second bent section 1513 protruding from the first bent section 1512 in the X direction is H2, which satisfies: 1% ≤ H2/L0 ≤ 10%.

The ratio of H2 to L0 may be 1%, 2.5%, 5%, 7%, 9%, or 10%. By defining a range of the ratio of the length H2 of the second bent section 1513 protruding from the first bent section 1512 in the X direction to the length L0 of the top cover 151 in the X direction, the occupancy of transverse space of the battery cell 12 can be reduced while mounting space for the terminal post 152 is implemented. As such, the space utilization of the battery cell 12 by the cell 14 is improved, thereby improving the energy density of the battery cell 12.

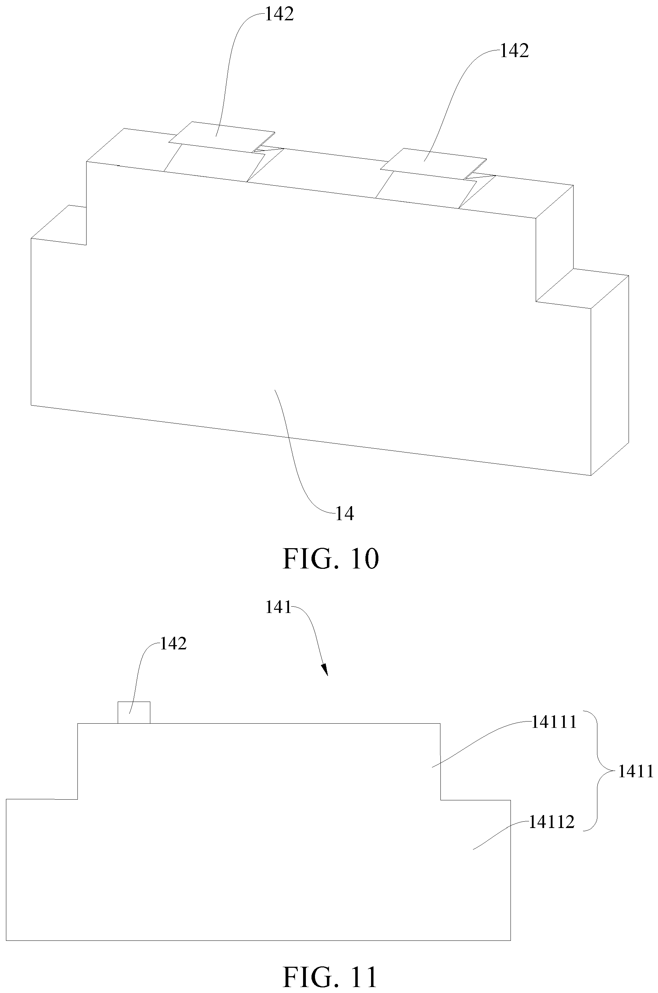

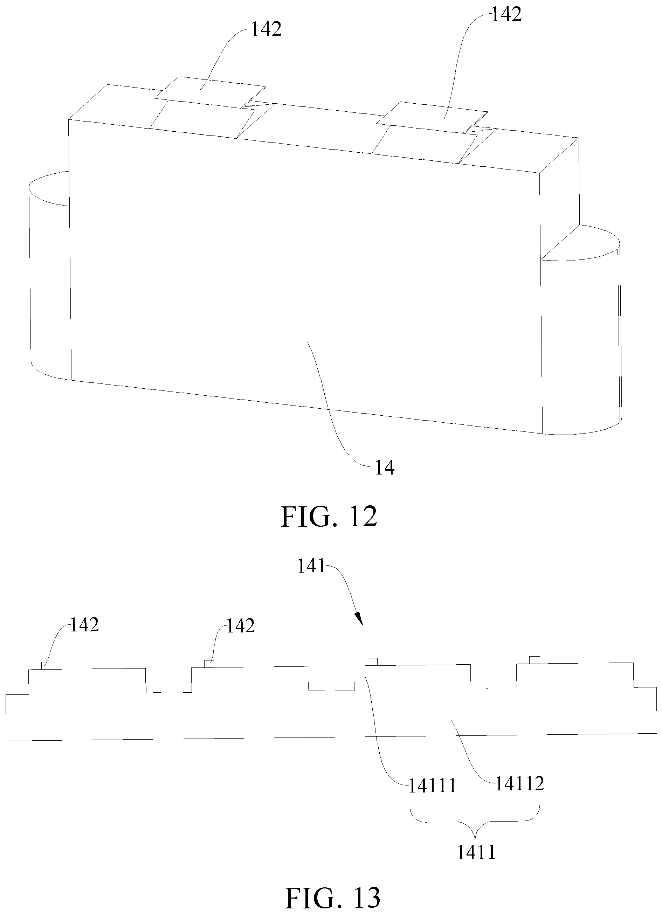

According to some embodiments of the present application, as shown in FIG. 11 and FIG. 13, the present application further provides the electrode sheet 141, including an electrode sheet body portion 1411 and the tab 142.

The electrode sheet body portion 1411 includes a first portion 14111 and a second portion 14112 connected to each other in the Z direction. A length of the first portion 14111 in the X direction is less than a length of the second portion 14112 in the X direction. The first portion 14111 has a notch formed thereon, and the notch is used for avoiding the first bent section 1512. The tab 142 is connected to a side of the first portion 14111 that faces away from the second portion 14112.

The notch formed on the first portion 14111 is used for avoiding the first bent section 1512 and the second bent section 1513 of the top cover 151, so that the electrode sheet 141 fits with the top cover 151. As such, the space utilization of the battery 10 by the cell 14 is improved.

The tab 142 is connected to the side of the first portion 14111 that faces away from the second portion 14112, and the tab 142 extends in the Z direction, so that occupancy space of the tab 142 and the occupancy space of the terminal post 152 are located on different sides of the battery cell 12. Compared with disposing the tab 142 and the terminal post 152 on a same side of the electrode sheet 141, this enables the space occupancy of the battery cell 12 by the tab 142 and the terminal post 152 to be saved. As such, the space utilization of the battery cell 12 by the cell 14 is improved, thereby improving the energy density of the battery cell 12.

The electrode sheet 141 provided in the embodiments of the present application can fit with the top cover 151 through the design of the notch. Compared with a design solution in which terminal posts protrude from a same side or terminal posts protrude from different sides, on the one hand, the present application can make full use of transverse space of the battery cell 12 in the X direction. The occupancy of the longitudinal dimension of the battery cell 12 in the Z direction is reduced, increasing the volume of the cell 14 of the battery cell 12 in the case of fixed dimensions of the battery cell 12. As such, the space utilization of the battery cell 12 by the cell 14 is improved, thereby improving the energy density of the battery cell 12. On the other hand, two terminal posts 152 are respectively disposed on two sides of the battery cell 12 in the X direction, so that the adjacent battery cells 12 can be welded together through the butt welding of the terminal posts 152. Compared with a solution in which two terminal posts 152 extending in a same direction require a busbar assembly or an adapter plate to connect two battery cells 12 together, this reduces the usage of and space occupied by a busbar or a busbar assembly, reducing the space occupancy of the battery cell. The butt welding saves more welding space, so that the space utilization of the battery 10 by the cell 14 is improved, thereby improving the energy density of the battery 10 with the combination of the plurality of battery cells 12.

In some embodiments, as shown in FIG. 10 and FIG. 11, the electrode sheet 141 is applied to a stacked cell 14. The notches are provided at two ends of the first portion 14111 in the X direction. A distance from the tab 142 to one of the notches is less than a distance to the other notch, so that a positive electrode tab and a negative electrode tab are spaced apart when a positive electrode sheet and a negative electrode sheet are stacked together.

The electrode sheet 141 may be a positive electrode sheet or a negative electrode sheet.

In some embodiments, as shown in FIG. 12 and FIG. 13, the electrode sheet 141 is applied to a wound cell 14. The plurality of notches divide the first portion 14111 into a plurality of sections, each section being provided with the tab 142. The electrode sheet 141 includes a plurality of sub-electrode sheets connected in the X direction. The second portions 14112 of two adjacent ones of the sub-electrode sheets are connected to each other. The first portions 14111 of the two adjacent ones of the sub-electrode sheets are separated from each other by the notch. A distance from the tab 141 to one of two adjacent notches is less than a distance to the other notch. This enables the positive electrode tab and the negative electrode tab to be spaced apart when the positive electrode sheet and the negative electrode sheet are wound together.

The electrode sheet 141 may be a positive electrode sheet or a negative electrode sheet.

According to some embodiments of the present application, as shown in FIG. 10 and FIG. 12, the present application further provides the cell 14. The cell 14 includes a separator and the electrode sheet 141 according to any of the foregoing embodiments. The electrode sheet 141 includes the positive electrode sheet and the negative electrode sheet. The separator is located between the electrode sheet body portions 1411 of the positive electrode sheet and the negative electrode sheet.

The cell 14 provided in the embodiments of the present application can fit with the top cover 151 by using the electrode sheet 141 having the notch. Compared with a design solution in which terminal posts protrude from a same side or terminal posts protrude from different sides, on the one hand, the present application can make full use of the transverse space of the battery cell 12. The occupancy of longitudinal space of the battery cell 12 is reduced, increasing the volume of the cell 14 of the battery cell 12 in the case of fixed dimensions of the battery cell 12. As such, the space utilization of the battery cell 12 by the cell 14 is improved, thereby improving the energy density of the battery cell 12. On the other hand, the two terminal posts 152 are respectively disposed on two sides of the battery cell 12, so that the adjacent battery cells 12 can be welded together through the butt welding of the terminal posts 152. Compared with a solution in which two terminal posts 152 extending in a same direction require a busbar assembly or an adapter plate to connect two battery cells 12 together, the butt welding saves more welding space, so that the space utilization of the battery 10 by the cell 14 is improved, thereby improving the energy density of the battery 10 with the combination of the plurality of battery cells 12.

In some embodiments, as shown in FIG. 10 and FIG. 12, the positive electrode tab of the positive electrode sheet and the negative electrode tab of the negative electrode sheet are located on a same side. After the positive electrode sheet and the negative electrode sheet are stacked to form the cell 14, the positive electrode tab and the negative electrode tab are located on the same side of the cell 14. Compared with a structure in which the positive electrode tab and the negative electrode tab are located on different sides of the cell 14, this can reduce the space occupancy of the battery cell 12, so that the space utilization of the battery cell 12 by the cell 14 can be improved, thereby improving the energy density of the battery cell 12.

According to some embodiments of the present application, the present application provides the battery cell 12.

The battery cell 12 includes the case 13, the cell 14, and the top cover assembly 15 according to any of the foregoing embodiments. The cell 14 is disposed inside the case 13, and the top cover assembly 15 is mounted at the opening 131.

The cell 14 is formed by the electrode sheet 141 according to any of the foregoing embodiments.

In the foregoing technical solution, an outer contour of the cell 14 according to any of the foregoing embodiments is adapted to an outer contour of the top cover assembly 15, so that the transverse space of the battery cell 12 can be fully utilized. The space occupancy of the battery cell 12 is reduced, increasing the volume of the cell 14 of the battery cell 12 in the case of fixed dimensions of the battery cell 12. As such, the space utilization of the battery cell 12 by the cell 14 is improved, thereby improving the energy density of the battery cell 12.

The top cover 151 provided in any of the foregoing embodiments is designed into the bent shape, with the terminal posts 152 extending in different directions. Compared with a design solution in which two terminal posts 152 extend in a same direction, on the one hand, the present application can make full use of the transverse space of the battery cell 12. The space occupancy of the battery cell 12 is reduced, increasing the volume of the cell 14 of the battery cell 12 in the case of fixed dimensions of the battery cell 12. As such, the space utilization of the battery cell 12 by the cell 14 is improved, thereby improving the energy density of the battery cell 12. On the other hand, in grouping the battery cells, the butt welding can be performed on the terminal posts of the adjacent battery cells. This reduces the usage of and space occupied by a busbar or a busbar assembly, reducing the space occupancy of the battery cell. The space utilization of the battery cell by the cell is improved, thereby improving the energy density of the battery 10 with the combination of the plurality of battery cells 12.

In some embodiments, the positive electrode tab and the negative electrode tab of the cell 14 are located on a same side.

A transverse projection of each of the positive electrode tab and the negative electrode tab along the battery cell 12 and a transverse projection of the first bent section 1512 along the battery cell 12 have an overlap portion. That is, the occupancy space of the tab 142 and the occupancy space of the terminal post 152 are combined together. The space occupancy of the battery cell 12 is reduced, increasing the volume of the cell 14 of the battery cell 12 in the case of fixed dimensions of the battery cell 12. As such, the space utilization of the battery cell 12 by the cell 14 is improved, thereby improving the energy density of the battery cell 12.

In some embodiments, as shown in FIG. 4, the electrode terminal further includes an adapter 16. The adapter 16 includes a first section 161 and a second section 162 that are connected and bent relative to each other. The first section 161 is connected to the terminal post 152, and the second section 162 is connected to the tab 142.

The adapter 16 is disposed between the top cover 151 and the cell 14. There are two adapters 16, where one adapter 16 is configured to connect to one of the terminal posts 152 and the positive electrode tab, and the other adapter 16 is configured to connect to the other terminal post 152 and the negative electrode tab.

The cell 14 may be a stacked cell or a wound cell. A stacked structure has a higher energy density, while a wound structure has a faster production speed.

In some embodiments, as shown in FIG. 5, a length of the battery cell 12 in the X direction is L4, which satisfies: 100 mm ≤ L4 ≤ 400 mm.

L4 of the battery cell 12 may be 100 mm, 200 mm, 250 mm, 300 mm, or 400 mm.

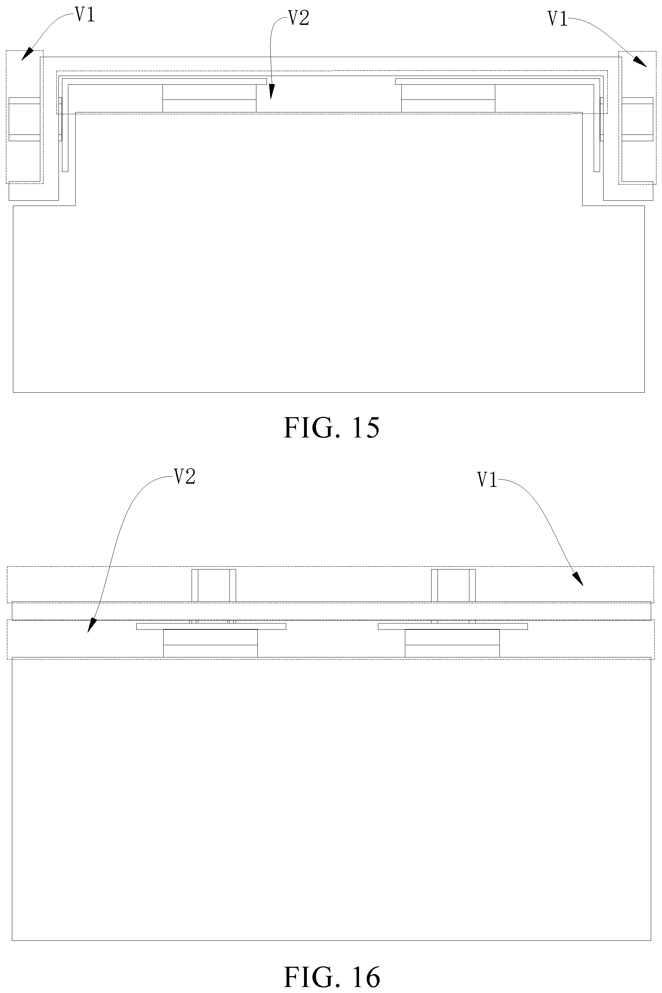

It should be noted that, as shown in FIG. 16, for a battery cell of the related technology in which a tab and a terminal post are located on a same side of a cell, when a length of the battery cell is less than 400 mm, occupancy space of the tab and occupancy space of the terminal post account for a lot of space in the Z direction, so that the ratio of the occupancy space of the tab and the occupancy space of the terminal post to total space of the battery cell increases. That is, the solution of the battery cell in the related technology is not advantageous when the length of the battery cell in the X direction is less than 400 mm.

However, the present application provides the battery cell 12. Since the tab 142 and the terminal post 152 are located on different sides of the battery cell 12, and the positive electrode tab and the negative electrode tab are located on the same side of the battery cell 12, when the length of the battery cell 12 in the X direction is less than 400 mm, the occupancy space of the tab 142 and the occupancy space of the tab terminal post 152 in the space of the battery cell 12 can be better reduced. When the dimension of the battery cell 12 is less than 400 mm, the space utilization of the battery cell 12 by the cell 14 is improved, thereby improving the energy density of the battery cell 12.

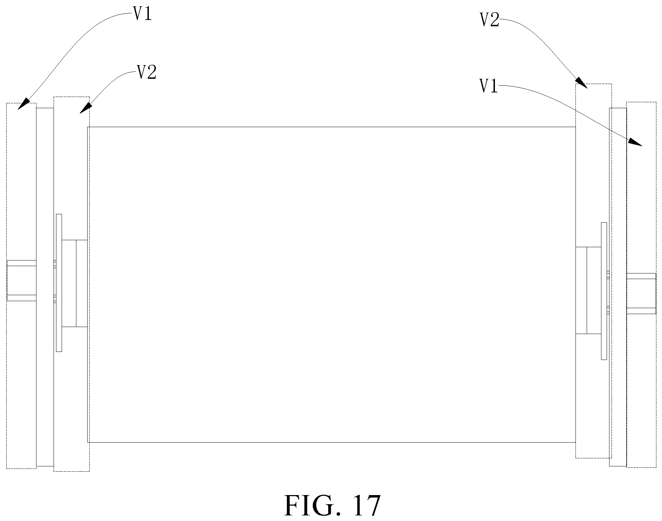

The fixed dimension of the battery cell 12 is compared with different mounting positions for the terminal posts 152. For a structure of the battery cell 12 in which the terminal posts 152 face two sides, reference is made to FIG. 15. For a structure of the battery cell 12 in which the terminal posts 152 protrude from a same side, reference is made to FIG. 16. For a structure of the battery cell 12 in which the terminal posts 152 protrude from different sides, reference is made to FIG. 17. The space utilization of the battery cell 12 is calculated, to obtain the following data in Table 1:

**Table 1**

| | Examples | Terminal post mounting position | Length/mm | Width/mm | Thickness/mm | Space utilization/% |
|---|---|---|---|---|---|---|
| First set | Example 1 | Terminal posts facing two sides | 100 | 150 | 30 | 81.72 |
| | Comparative Example 1 | Terminal posts protruding from the same side | 100 | 150 | 30 | 80.96 |
| | Comparative Example 2 | Terminal posts protruding from different sides | 100 | 150 | 30 | 63.80 |
| Second set | Example 2 | Terminal posts facing two sides | 200 | 150 | 30 | 86.59 |
| | Comparative Example 3 | Terminal posts protruding from the same side | 200 | 150 | 30 | 85.78 |
| | Comparative Example 4 | Terminal posts protruding from different sides | 200 | 150 | 30 | 81.90 |
| Third set | Example 3 | Terminal posts facing two sides | 300 | 150 | 30 | 88.21 |
| | Comparative Example 5 | Terminal posts protruding from the same side | 300 | 150 | 30 | 87.39 |
| | Comparative Example 6 | Terminal posts protruding from different sides | 300 | 150 | 30 | 87.93 |

As shown in Table 1, in a first set of comparison data of the battery cell with dimensions of 100 mm * 150 mm * 30 mm, as shown in FIG. 15, in Example 1, terminal post occupancy space V1 accounts for only part of the cell in the X direction, and space utilization of the battery cell is 81.72%. As shown in FIG. 16, in the cell with terminal posts protruding from a same side in Comparison Example 1, terminal post occupancy space V1 and tab occupancy space V2 together occupy the top of the cell, with an occupation length being at least a total length of the terminal post and the tab in the Z direction, and space utilization of the battery cell is 80.96%. As shown in FIG. 17, in the cell with terminal posts protruding from different sides in Comparative Example 2, terminal post occupancy space V1 and tab occupancy space V2 together occupy two ends of the cell in the X direction, with an occupation length at the two ends being at least a total length of the terminal post and the tab in the X direction, and space utilization of the battery cell is 63.80%. It can be seen that in the first set of comparison data of the battery cell with the dimensions of 100 mm * 150 mm * 30 mm, the battery cell having the cell with terminal posts facing two sides has the highest space utilization.

In a second set of comparison data of the battery cell with dimensions of 200 mm * 150 mm * 30 mm, as shown in FIG. 15, in Example 2, terminal post occupancy space V1 accounts for only part of the cell in the X direction, and space utilization of the battery cell is 86.59%. As shown in FIG. 16, in the cell with terminal posts protruding from a same side in Comparison Example 3, terminal post occupancy space V1 and tab occupancy space V2 together occupy the top of the cell, with an occupation length being at least a total length of the terminal post and the tab in the Z direction, and space utilization of the battery cell is 85.78%. As shown in FIG. 17, in the cell with terminal posts protruding from different sides in Comparative Example 4, terminal post occupancy space V1 and tab occupancy space V2 together occupy two ends of the cell in the X direction, with an occupation length at the two ends being at least a total length of the terminal post and the tab in the X direction, and space utilization of the battery cell is 81.90%. It can be seen that in the first set of comparison data of the battery cell with the dimensions of 200 mm * 150 mm * 30 mm, the battery cell having the cell with terminal posts facing two sides has the highest space utilization.

In a third set of comparison data of the battery cell with dimensions of 300 mm * 150 mm * 30 mm, as shown in FIG. 15, in Example 3, terminal post occupancy space V1 accounts for only part of the cell in the X direction, and space utilization of the battery cell is 88.21%. As shown in FIG. 16, in the cell with terminal posts protruding from a same side in Comparison Example 5, terminal post occupancy space V1 and tab occupancy space V2 together occupy the top of the cell, with an occupation length being at least a total length of the terminal post and the tab in the Z direction, and space utilization of the battery cell is 87.39%. As shown in FIG. 17, in the cell with terminal posts protruding from different sides in Comparative Example 6, terminal post occupancy space V1 and tab occupancy space V2 together occupy two ends of the cell in the length direction of the cell, with an occupation length at the two ends being at least a total length of the terminal post and the tab in the X direction, and space utilization of the battery cell is 87.93%. It can be seen that in the first set of comparison data of the battery cell with the dimensions of 300 mm * 150 mm * 30 mm, the battery cell having the cell with terminal posts facing two sides has the highest space utilization.

To sum up, the space utilization of the battery cell 12 with the terminal posts 152 facing two sides is greater than both the space utilization of the battery cell 12 having a structure with terminal posts protruding from a same side and the space utilization of the battery cell having a structure with terminal posts protruding from different sides.

According to some embodiments of the present application, the present application further provides the battery 10. The battery 10 includes the battery cell 12 according to any of the foregoing embodiments.

The battery cell 12 according to any of the foregoing embodiments has a high energy density, so that the battery 10 having the battery cell 12 has a high energy density.

In some embodiments, the terminal posts 152 of at least part of adjacent ones of the battery cells 12 are disposed opposite each other and in butt connection with each other, so that at least part of adjacent ones of the battery cells 12 do not require a busbar assembly or an adapter plate for welding, thereby saving the welding space. As such, the space utilization of the battery 10 by the cell 14 is improved, thereby improving the energy density of the battery 10 with the combination of the plurality of battery cells 12.

According to some embodiments of the present application, the present application further provides a power consuming apparatus, including the battery 10 according to any of the foregoing embodiments. The battery 10 is configured to supply electric energy to the power consuming apparatus.

The foregoing battery 10 has a high energy density, and therefore the power consuming apparatus including the battery 10 has a long battery life.

It should be noted that the embodiments in the present application and the features in the embodiments may be combined with each other without causing any conflict.

The foregoing descriptions are merely preferred embodiments of the present application, but are not intended to limit the present application. A person skilled in the art may make various modifications and changes to the present application. Any modification, equivalent replacement, improvement, or the like made within the spirit and principle of the present application shall fall within the protection scope of the present application.

## Claims

1. A top cover assembly, applied to a battery, the top cover assembly comprising:
a top cover, the top cover comprising a top cover body portion and a first bent section, wherein two ends of the top cover body portion are respectively connected to the first bent sections bent relative to the top cover body portion; and
an electrode terminal, the electrode terminal comprising a terminal post, wherein the terminal post is mounted on the first bent section.

2. The top cover assembly according to claim 1, wherein an end of the terminal post is connected to the first bent section, a transverse projection of the terminal post in an X direction falls within a transverse projection of the first bent section in the X direction, and an outer contour of the transverse projection of the terminal post in the X direction is spaced apart from an outer contour of the transverse projection of the first bent section in the X direction.

3. The top cover assembly according to claim 1 or 2, wherein
the top cover further comprises a second bent section, wherein the second bent section is connected to an end of the first bent section that is away from the top cover body portion, and the second bent section is bent relative to the first bent section and extends in a direction away from the top cover body portion.

4. The top cover assembly according to claim 3, wherein a length of the terminal post protruding from the first bent section in the X direction is greater than or equal to a length of the second bent section protruding from the first bent section in the X direction.

5. The top cover assembly according to claim 4, wherein the length of the terminal post protruding from the first bent section in the X direction is H1, and the length of the second bent section protruding from the first bent section in the X direction is H2, which satisfies: 0 mm < H1-H2 ≤ 3 mm.

6. The top cover assembly according to any one of claims 3 to 5, wherein a length of the top cover in the X direction is L0, and the length of the second bent section protruding from the first bent section in the X direction is H2, which satisfies: 1% ≤ H2/L0 ≤ 10%.

7. The top cover assembly according to any one of claims 1 to 6, wherein a length of the first bent section in a Z direction is H3, and a length of the terminal post in the Z direction is L1, which satisfies: 1 < H3/L1 ≤ 4.

8. The top cover assembly according to any one of claims 1 to 7, wherein a length of the first bent section in a Y direction is L2, and a length of the terminal post in the Y direction is L3, which satisfies: 1 < L2/L3 ≤ 2.

9. An electrode sheet, comprising:
an electrode sheet body portion, the electrode sheet body portion comprising a first portion and a second portion connected to each other in a Z direction, wherein a length of the first portion in an X direction is less than a length of the second portion in the X direction, the first portion has a notch formed thereon, and the notch is used for avoiding the first bent section; and
a tab, the tab being connected to a side of the first portion that faces away from the second portion.

10. The electrode sheet according to claim 9, applied to a stacked cell, wherein the notches are provided at two ends of the first portion in the X direction, and a distance from the tab to one of the notches is less than a distance to the other notch.

11. The electrode sheet according to claim 9, applied to a wound cell, wherein the plurality of notches divide the first portion into a plurality of sections, each section being provided with the tab; and the electrode sheet comprises a plurality of sub-electrode sheets connected in the X direction, wherein the second portions of two adjacent ones of the sub-electrode sheets are connected to each other, the first portions of two adjacent ones of the sub-electrode sheets are separated from each other by the notch, and a distance from the tab to one of two adjacent notches is less than a distance to the other notch.

12. A battery cell, comprising:
a case, the case having an opening formed thereon;
a cell disposed in the case; and
the top cover assembly according to any one of claims 1 to 8, wherein the top cover assembly is mounted at the opening.

13. The battery cell according to claim 12, wherein a positive electrode tab and a negative electrode tab of the cell are located on a same side.

14. The battery cell according to claim 13, wherein the electrode terminal further comprises an adapter, the adapter comprising a first section and a second section that are connected and bent relative to each other, the first section being connected to the terminal post, and the second section being connected to the tab.

15. The battery cell according to any one of claims 12 to 14, wherein the cell is a stacked cell or a wound cell.

16. The battery cell according to any one of claims 12 to 15, wherein a length of the battery cell in an X direction is L4, which satisfies: 100 mm ≤ L4 ≤ 400 mm.

17. A battery, comprising:
a plurality of battery cells according to any one of claims 12 to 16.

18. The battery according to claim 17, wherein terminal posts of at least part of adjacent ones of the battery cells are disposed opposite each other and in butt connection with each other.

19. A power consuming apparatus, comprising:
the battery according to claim 17 or 18, wherein the battery is configured to supply electric energy to the power consuming apparatus.
